# EUROPEAN PATENT APPLICATION

(11) **EP 1 770 264 A1**
(43) Date of publication of application: **04.04.2007**
(21) Application number: 05425687.0
(22) Date of filing: 03.10.2005
(51) Int. Cl.: F02D 9/10, F02B 31/08

(54) **Progressive-control actuator and relative control method**

(71) Applicant: MAGNETI MARELLI POWERTRAIN S.p.A., 20011 Corbetta (MI) (IT)
(72) Inventor: Fornara, Stefano, 41100 Modena (IT); Lambertini, Loris, 40056 Crespellano (IT)
(74) Representative: Jorio, Paolo

(57) **Abstract**

A progressive-control actuator (16) having a movable member (17); an activating member (18) for moving the movable member (17) along a given path; a regulating chamber (22) housing part of the movable member (17) and filled with a rheological fluid (23); and a control device (24) for applying a variable voltage to the rheological fluid (23) in the regulating chamber (22) to vary the viscosity of the rheological fluid (23) between a minimum value, at which the movable member (17) moves substantially freely, and a maximum value, at which the movable member (17) is locked.

## Description

### TECHNICAL FIELD

The present invention relates to a progressive-control actuator and relative control method.

The present invention advantageously applies to an internal combustion engine actuator, to which the following description refers purely by way of example.

### BACKGROUND ART

A modern internal combustion engine comprises a number of servocontrolled actuators controlled by an electronic central control unit to automatically change the position of respective engine regulating or control members.

To simply move a regulating or control member between two limit positions, i.e. when the regulating or control member is only called upon to assume two positions, non-progressive actuators are employed, which may be electric or non-balanced pneumatic/hydraulic actuators (depending on cost, size, power, and speed requirements).

When the regulating or control member is called upon to assume all the positions ranging between two limit positions, progressive actuators are employed, which may be electric or balanced pneumatic/hydraulic actuators (again depending on cost, size, power, and speed requirements). In the low and medium power range, both electric actuators and balanced pneumatic/hydraulic actuators are particularly expensive and bulky - electric actuators on account of the control electronics, and pneumatic/hydraulic actuators on account of the solenoid valves and relative pneumatic/hydraulic circuits.

### DISCLOSURE OF INVENTION

It is an object of the present invention to provide a progressive-control actuator and relative control method, designed to eliminate the aforementioned drawbacks, and which are cheap and easy to implement.

According to the present invention, there are provided a progressive-control actuator and relative control method, as recited in the accompanying Claims.

### BRIEF DESCRIPTION OF THE DRAWINGS

A non-limiting embodiment of the present invention will be described by way of example with reference to the accompanying drawings, in which:
Figure 1 shows a schematic view of an internal combustion engine featuring a progressive-control actuator in accordance with the present invention;
Figure 2 shows a schematic view of the progressive-control actuator.

### PREFERRED EMBODIMENT OF THE INVENTION

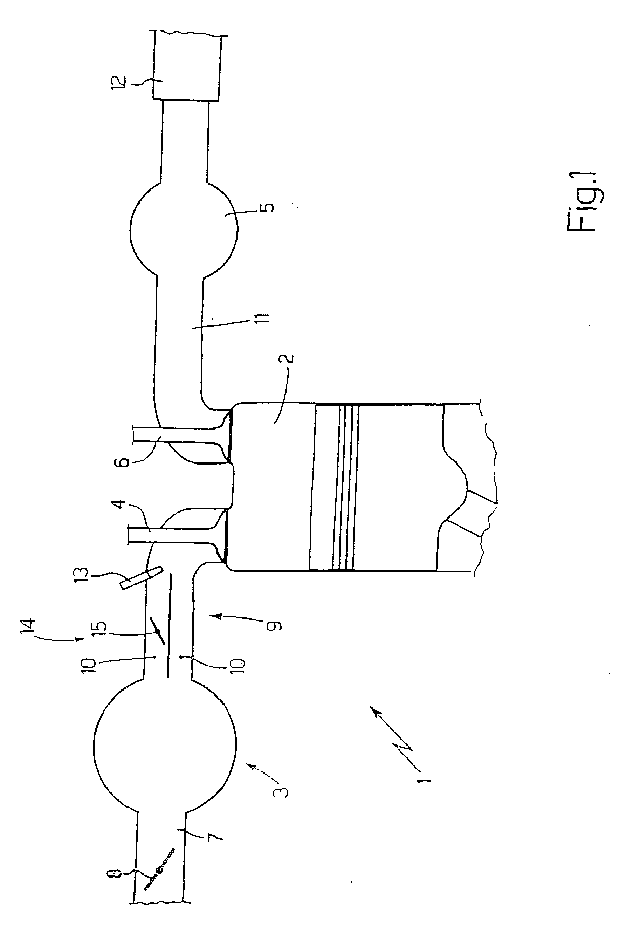

Number 1 in Figure 1 indicates as a whole an internal combustion engine having four cylinders 2 (only one shown in Figure 1), each of which is connected to an intake manifold 3 via two intake valves 4 (only one shown in Figure 1), and to an exhaust manifold 5 via two exhaust valves 6 (only one shown in Figure 1).

Intake manifold 3 receives fresh air (i.e. outside air) along a feed conduit 7 regulated by a throttle valve 8, and is connected to cylinders 2 by respective intake conduits 9 (only one shown in Figure 1), each of which comprises two parallel channels 10 and is regulated by corresponding intake valves 4. Similarly, exhaust manifold 5 is connected to cylinders 2 by respective exhaust conduits 11 (only one shown in Figure 1), each of which is regulated by corresponding exhaust valves 6; and an exhaust pipe 12, terminating with a known muffler (not shown), extends from exhaust manifold 5 to emit combustion gases into the atmosphere.

In a preferred embodiment, fuel (e.g. petrol, diesel fuel, methane or LPG) is injected into each intake conduit 9 by a respective injector 13 close to corresponding intake valves 4. In an alternative embodiment not shown, injectors 13 are located to inject fuel directly into each cylinder 2.

Intake manifold 3 comprises a swirl system 14 which, as engine 1 is running, varies the cross section of intake conduits 9 as a function of the speed of engine 1. More specifically, swirl system 14 comprises, for each intake conduit 9, a throttle valve 15 mounted along one of the two channels 10 of intake conduit 9 to vary the air flow section of channel 10. More specifically, each throttle valve 15 is movable between a closed position, in which it closes channel 10 completely, and a fully-open position.

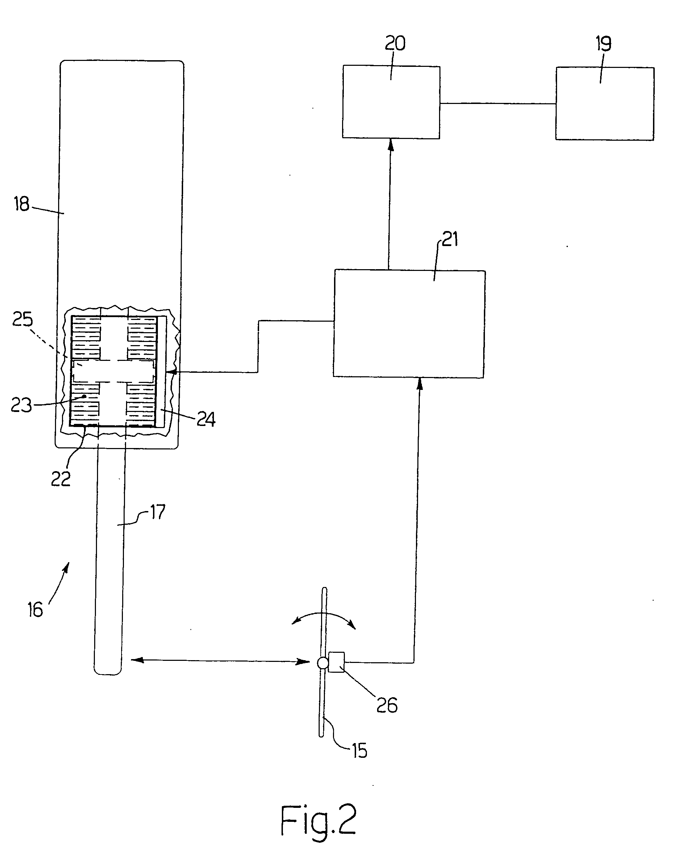

As shown in Figure 2, swirl system 14 comprises one progressive-control actuator 16 for simultaneously and synchronously rotating all four throttle valves 15 into all the positions ranging between the two, closed and fully-open, limit positions.

Actuator 16 comprises a piston 17 defining a movable member; and a pneumatic cylinder 18 defining an activating member for moving piston 17 inside cylinder 18. Cylinder 18 is connected to a compressed-air feed device 19 (e.g. a compressed-air tank maintained under pressure by a compressor) via a solenoid valve 20 controlled by a control unit 21. In an alternative embodiment not shown, pneumatic cylinder 18 is replaced by an equivalent hydraulic cylinder 18.

Actuator 16 also comprises a regulating chamber 22 housed inside cylinder 18, and which in turn houses part of piston 17 and is filled with a rheological fluid 23. Regulating chamber 22 is fitted with a control device 24 controlled by control unit 21, and which applies a variable voltage to rheological fluid 23 in regulating chamber 22 to vary the viscosity of rheological fluid 23 between a minimum value, at which piston 17 moves substantially freely, and a maximum value, at which piston 17 is locked.

Piston 17 preferably comprises at least one wall 25 housed inside regulating chamber 22 and perpendicular to the travelling direction of piston 17. An alternative embodiment, not shown, comprises a number of parallel, spaced walls 25. The function of wall 25 is to increase mechanical interaction between piston 17 and rheological fluid 23 inside regulating chamber 22.

A sensor 26 determines, instant by instant, and transmits the position and/or speed of piston 17 to control unit 21. In the Figure 2 embodiment, sensor 26 is an angle encoder connected mechanically to throttle valve 15, in turn connected mechanically to one end of piston 17, so that sensor 26 determines the position of piston 17 indirectly by determining the position of throttle valve 15 connected mechanically to piston 17. In an alternative embodiment not shown, sensor 26 is connected to piston 17, and so determines the position of piston 17 directly.

To move piston 17 from a current start position to a target end position, control unit 21 activates cylinder 18 by means of solenoid valve 20 to move piston 17 into the end position; at the same time, by means of control device 24, control unit 21 applies a variable, gradually increasing voltage to the rheological fluid 23 in regulating chamber 22 to vary the viscosity of rheological fluid 23 to a maximum value, at which piston 17 is locked on reaching the end position. Using the piston 17 position and/or speed data supplied by sensor 26, control unit 21 feedback-controls the voltage applied to rheological fluid 23. As a feedback variable, control unit 21 may use the position and/or speed of piston 17, the choice obviously depending on the static and dynamic performance demanded of the system.

If necessary, control unit 21 varies the voltage applied to rheological fluid 23 to vary the viscosity of rheological fluid 23 so that piston 27 describes a predetermined target speed profile.

In an alternative embodiment not shown, each intake conduit 9 comprises one channel 10, and swirl system 14 is replaced by a tumble system, which varies the cross section of intake conduits 9, as a function of engine speed, by means of four throttle valves housed inside intake conduits 9 and controlled by actuator 16.

Actuator 16 as described above has numerous advantages. Given the same performance, it is cheaper and more compact than a balanced pneumatic/hydraulic actuator or electric actuator, and, being straightforward in design, is precise, strong, and easy to control.

Given the numerous advantages of actuator 16 as described herein, it may obviously be employed for any application other than a swirl or tumble system.

## Claims

1. A progressive-control actuator (16); the actuator (16) comprising a movable member (17), and an activating member (18) for moving the movable member (17) along a given path; and the actuator (16) being **characterized by** comprising a regulating chamber (22) housing part of the movable member (17) and filled with a rheological fluid (23); and a control device (24) for applying a variable voltage to the rheological fluid (23) in the regulating chamber (22) to vary the viscosity of the rheological fluid (23) between a minimum value, at which the movable member (17) moves substantially freely, and a maximum value, at which the movable member (17) is locked.

2. An actuator (16) as claimed in Claim 1, wherein the movable member (17) is a piston moving inside a cylinder; and the activating member (18) comprises a feed device (19) supplying a pressurized fluid, and at least one solenoid valve (20) connecting the feed device (19) to the cylinder.

3. An actuator (16) as claimed in Claim 1 or 2, wherein the movable member (17) comprises at least one wall (25) housed inside the regulating chamber (22) and perpendicular to the travelling direction of the movable member (17).

4. An actuator (16) as claimed in Claim 3, wherein the movable member (17) comprises a number of walls (25), which are housed inside the regulating chamber (22), are perpendicular to the travelling direction of the movable member (17), and are parallel to and spaced apart from one another.

5. An actuator (16) as claimed in one of Claims 1 to 4, and comprising a sensor (26) for determining the position of the movable member (17); a control unit (21) is connected to the sensor (26) to feedback-control the position of the movable member (17).

6. An actuator (16) as claimed in Claim 5, wherein the sensor (26) is connected to the movable member (17), and determines the position of the movable member (17) directly.

7. An actuator (16) as claimed in Claim 5, wherein the sensor (26) is connected to a control member (15) moved by the movable member (17), so that the sensor (26) determines the position of the movable member (17) indirectly.

8. An actuator (16) as claimed in one of Claims 1 to 7, wherein the movable member (17) controls a rotary control member (15) via a mechanical connection.

9. A method of controlling a progressive-control actuator (16); the actuator (16) comprising a movable member (17), an activating member (18) for moving the movable member (17) along a given path, and a regulating chamber (22) housing part of the movable member (17) and filled with a rheological fluid (23); and the method being **characterized by** comprising the steps of:
activating the activating member (18) to move the movable member (17) into an end position; and
applying a variable, gradually increasing voltage to the rheological fluid (23) in the regulating chamber (22) to vary the viscosity of the rheological fluid (23) to a maximum value, at which the movable member (17) is locked upon reaching the end position.

10. A method as claimed in Claim 9, and comprising the further step of varying the voltage applied to the rheological fluid (23) to vary the viscosity of the rheological fluid (23) so that the movable member (17) describes a predetermined speed profile.

11. A method as claimed in Claim 9 or 10, and comprising the further step of determining the position of the movable member (17), and feedback-controlling the voltage applied to the rheological fluid (23) using the position of the movable member (17) as a feedback variable.

12. A method as claimed in Claim 9, 10 or 11, and comprising the further step of determining the speed of the movable member (17), and feedback-controlling the voltage applied to the rheological fluid (23) using the speed of the movable member (17) as a feedback variable.

13. A method as claimed in one of Claims 9 to 12, wherein the movable member (17) is a piston moving inside a cylinder; and the activating member (18) comprises a feed device (19) supplying a pressurized fluid, and at least one solenoid valve (20) connecting the feed device (19) to the cylinder.

14. A method as claimed in one of Claims 9 to 13, wherein the movable member (17) comprises at least one wall (25) housed inside the regulating chamber (22) and perpendicular to the travelling direction of the movable member (17).

15. A method as claimed in Claim 14, wherein the movable member (17) comprises a number of walls (25), which are housed inside the regulating chamber (22), are perpendicular to the travelling direction of the movable member (17), and are parallel to and spaced apart from one another.

16. An intake manifold (3) with a throttle system (14) for an internal combustion engine (1) having a number of cylinders (2); the intake manifold (3) comprising, for each cylinder (2), an intake conduit (9) connecting the intake manifold (3) to the cylinder (2); the throttle system (14) comprising, for each intake conduit (9), a throttle valve (15) for varying the air flow section of the intake conduit (9), and an actuator (16) for activating the throttle valves (15) and which comprises a movable member (17), and an activating member (18) for moving the movable member (17) along a given path; the intake manifold (3) being **characterized in that** the actuator (16) comprises a regulating chamber (22) housing part of the movable member (17) and filled with a rheological fluid (23); and a control device (24) for applying a variable voltage to the rheological fluid (23) in the regulating chamber (22) to vary the viscosity of the rheological fluid (23) between a minimum value, at which the movable member (17) moves substantially freely, and a maximum value, at which the movable member (17) is locked.

17. An intake manifold (3) as claimed in Claim 16, wherein the movable member (17) is a piston moving inside a cylinder; and the activating member (18) comprises a feed device (19) supplying a pressurized fluid, and at least one solenoid valve (20) connecting the feed device (19) to the cylinder.

18. An intake manifold (3) as claimed in Claim 16 or 17, wherein the movable member (17) comprises at least one wall (25) housed inside the regulating chamber (22) and perpendicular to the travelling direction of the movable member (17).

19. An intake manifold (3) as claimed in Claim 16, 17 or 18, wherein the actuator (16) comprises a sensor (26) for determining the position of the movable member (17); and a control unit (21) is connected to the sensor (26) to feedback-control the position of the movable member (17).

20. An intake manifold (3) as claimed in one of Claims 16 to 19, wherein the throttle system (14) is a swirl system.

21. An intake manifold (3) as claimed in one of Claims 16 to 19, wherein the throttle system (14) is a tumble system.
